# EUROPÄISCHE PATENTSCHRIFT

(11) **EP 4 620 889 B1**
(45) Veröffentlichungstag und Bekanntmachung des Hinweises auf die Patenterteilung: **25.02.2026**
(21) Anmeldenummer: 24164402.0
(22) Anmeldetag: 19.03.2024
(51) Int. Cl.: G01S 17/88, B66C 19/00, B66C 13/46

(54) **BEREICHSÜBERWACHUNG BEI EINEM INTERMODAL KRAN**
AREA MONITORING IN AN INTERMODAL CRANE
SURVEILLANCE DE ZONE DANS UNE GRUE INTERMODALE

(43) Veröffentlichungstag der Anmeldung: 24.09.2025
(73) Patentinhaber: SICK AG, 79183 Waldkirch (DE)
(72) Erfinder: von Bergner, Alexander, 22967 Tremsbüttel (DE); Krzikalla, Roland, 21244 Buchholz (DE)

(56) Entgegenhaltungen:
- EP-B1- 3 894 349
- WO-A1-2022/238620

## Beschreibung

Die vorliegende Erfindung betrifft das Gebiet einer Container-Verladeanlage in einem Container-Terminal. In solch einem Container Terminal werden Intermodal Kräne eingesetzt, um Container auf und von Transportfahrzeugen zu verladen. Unter einem Intermodal Kran ist eine spezielle Ausführung eines Krans zu verstehen, welcher bei einer mehrgliedrigen Transport- oder Lieferkette, die unterschiedlichen Verkehrsträger be- und entlädt, indem der Kran beispielsweise Container von einem Transportfahrzeug auf ein anderes Transportfahrzeug, beispielsweise von einem LKW auf einen Containerzug manövriert. Ein solcher Containerkran wird durch eine Kransteuerung bewegt, wobei die Aufnahme des Containers und die Bewegung des Containers zu seinem Bestimmungsort bevorzugt automatisiert ablaufen, zumindest teilautomatisiert. Ein Containerkran kann als schienengebundener Portalkran (RMG, Rail Mounted Gantry) oder als gummibereifter Portalkran (RTG; Rubber Tyred Gantry) ausgebildet sein.

Zum Auf- und Entladen eines Transportfahrzeuges überspannt der Containerkran ein als Arbeitsfläche ausgebildetes Gebiet, in welches die Transportfahrzeuge entlang von Transportfahrzeugspuren fahren, um sich unter den Containerkranbereich zum Be- und Entladen zu positionieren. Zwischen solchen Ladebereichen sind Zugangsbereiche ausgebildet, damit insbesondere Personen die Be- und Entladevorgänge unterstützen können.

Da die Bewegung eines Containerkrans bevorzugt teilweise automatisiert abläuft und ein Containerkranführer aufgrund der räumlichen Ausdehnung der Arbeitsfläche nur ein eingeschränktes Sichtfeld zur Verfügung hat, ist es notwendig, die Ladevorgänge durch Sensoren zu überwachen. Beispielsweise um sicherzustellen, dass wenn der Container mit dem Kran über den Zugangsbereich bewegt wird, sich keine Personen in diesem Bereich aufhalten, insbesondere nicht im Bereich unterhalb des Containers.

Die EP 3894349 B1 beschreibt eine Container-Verladeanlage und ein Verfahren zur Betriebsüberwachung der Anlage. In der von der EP 3894349 B1 beschriebenen Container-Verladeanlage weist die Arbeitsfläche unter dem Containerkran eine einzelne, längliche Ladeposition, als einen einzelnen Ladebereich für Straßentransportfahrzeuge auf. Oberhalb der Arbeitsfläche sind mehrere 3D-Laserscanner an dem Containerkran angebracht und eingerichtet, die Arbeitsfläche und das Straßentransportfahrzeug von schräg oben abzutasten. Dazu wird während eines Containerladevorgangs von den 3D-Laserscannern mindestens ein Scan durchgeführt, um eine Messpunktwolke zu erzeugen. Die Messpunktwolke weist Messpunkte auf, die eine Identifikation der Arbeitsfläche und der Straßentransportfahrzeuge erlauben.

In einer Ausführungsform der EP 3894349 B1 kann die Arbeitsfläche in L-förmige Teilzonen unterteilt werden, die sich zu einem Rechteck um die tatsächliche Ladeposition herum ergänzen, d.h. um das Straßentransportfahrzeug herum, das auf der Arbeitsfläche positioniert ist, so dass ein Laserscanner jeweils eine L-förmige Teilzone überblickt. Zu diesem Zweck sind die beiden Laserscanner in zwei sich gegenüberliegenden Ecken der Arbeitsfläche positioniert angeordnet und schräg in Bezug auf die Arbeitsfläche ausgerichtet, damit die L-förmigen Teilzonen erfasst werden können.

Die Anlage weist zusätzlich eine Personenerkennungseinheit auf. Die Personenerkennungseinheit identifiziert aus der Messpunktwolke die Arbeitsfläche und das Straßentransportfahrzeug. Gibt es innerhalb der Messpunktwolke einen Messpunkt, der mehr als 0,5 m über der identifizierten Arbeitsfläche liegt, wird ein Person-Wahrscheinlich-Signal von der Personenerkennungseinheit ausgegeben, so dass eine Sicherheitssteuerung die Kranbewegung verlangsamt, oder stoppt.

Dokument EP 3894349 B1 offenbart ein Container-Verladeanlage mit einer Steuereinrichtung, einem Containerkran und einer Arbeitsfläche unterhalb des Containerkrans, wobei der Containerkran mindestens ein Trägerelement aufweist, das sich über die Arbeitsfläche erstreckt, und wobei die Arbeitsfläche einen Ladebereich und Zugangsbereiche aufweist und der Ladebereich eingerichtet ist, Transportfahrzeuge, insbesondere Schienenfahrzeuge, zur Be- oder Entladung durch den Containerkran abschnittsweise aufzunehmen, und die Zugangsbereiche rechteckförmig ausgebildet sind, sodass Personen Zugang zu dem Ladebereich haben, wobei ein jeweiliger Zugangsbereich einen Überwachungsbereich aufweist, der durch mindestens einen 3D-Lidarsensor, zumindest während des Beladens der Transportfahrzeuge, insbesondere der Schienenfahrzeuge, in voller Breite überwacht wird, wobei sich der 3D-Lidarsensor oberhalb des jeweiligen Zugangsbereichs befindet.

Die in EP 3894349 B1 beschriebene Anlage hat den Nachteil, dass ein Bereich des L-förmigen Teilbereichs von einem 3D-Laserscanner genau dann nicht erfasst wird, wenn das Transportfahrzeug nicht vollständig in die Arbeitsfläche einfahren kann oder über diese hinausfährt, beispielsweise weil unterschiedliche Straßentransportfahrzeuge regelmäßig unterschiedliche Längen aufweisen oder es sich um Schienenfahrzeuge mit einer Anzahl von Wagons handelt. Dies ist insbesondere dann nachteilig, wenn der Bereich die in EP 3894349 B1 beschriebenen explizit für Personen ausgewiesenen Personenaufenthaltsbereiche umfasst, welche sich am Rand oder an einer Ecke der Arbeitsfläche befinden, wie es in Fig. 2 der EP 3894349 B1 skizziert ist. Die EP 3894349 B1 offenbart keine Zugangsbereiche, die jeweils zwischen zwei unmittelbar benachbarten Ladebereichen, rechteckförmig ausgebildet sind.

Die EP 2858937 B1 beschreibt einen Kran mit einem Hebezeug zum Durchführen eines Hebevorgangs, wobei das Hebezeug in einer Seitwärtsrichtung beweglich ist. Der Kran kann zum Erkennen einer Person in einem definierten Sicherheitsbereich einen Bildgebungssensor aufweisen. Eine Steuereinrichtung des Krans ist eingerichtet, den Betrieb des Hebezeugs zu blockieren, wenn der Bildgebungssensor eine Person im Sicherheitsbereich erkennt. EP 2858937 B1 offenbart eine Infrarotkamera als eine Kamera, wobei die Kamera an dem Hebezeug befestigt ist, so dass sich die Kamera mit dem Hebezeug mitbewegt.

Eine Kamera, die sich mit dem Hebezeug mitbewegt, hat den Nachteil, dass lediglich ein Bereich unmittelbar um das Hebezeug herum bzw. unmittelbar um den am Hebezeug befestigten Container herum, von der Kamera erfasst wird. Personen werden deshalb von der Kamera erst dann erfasst, wenn sie sich in diesem Bereich um den zu transportierenden Container herum aufhalten, d.h. im unmittelbaren Gefahrenbereich. Damit können die Personen aber nicht rechtzeitig gewarnt werden, beispielsweise so, dass eine Person Zeit hat, den Bereich zu verlassen, denn es ist davon auszugehen, dass die Personen im Zugangsbereich nicht ständig mitbekommen, was über ihnen passiert.

Die DE 102006044187 A1 beschreibt ein Verfahren zum Betrieb eines optischen Sensors, der zur Überwachung von Schutzzonen an einem Containerkran befestigt wird. Zur Überwachung wird der Sensor kontinuierlich in Längs- und Querrichtung geschwenkt. Die Schutzzonen befinden sich unterhalb des Krangerüsts und umfassen Zugangsbereiche für Personen, als auch die Fahrzeugspuren der zu be- bzw. entladenden Transportfahrzeuge. Aus diesem Grund überwacht ein Sensor eine Schutzzone, die sich über mehrere Zugangsbereiche und Fahrzeugspuren gemeinsam erstreckt (siehe Fig. 1b, DE 102006044187 A1).

Es ist daher eine Aufgabe der Erfindung, eine alternative Container-Verladeanlage und ein Verfahren zur Überwachung von Zugangsbereichen einer Container-Verladeanlage bereitzustellen, das insbesondere für unterschiedliche Transportfahrzeuglängen geeignet ist.

Die Aufgabe wird gelöst durch die Container-Verladeanlage nach Anspruch 1, durch das Verfahren nach Anspruch 9 und durch eine Steuereinrichtung nach Anspruch 8. Weitere Ausführungsformen sind Gegenstand der abhängigen Ansprüche.

Die erfindungsgemäße Container-Verladeanlage hat den Vorteil, dass nicht lediglich der Bereich unmittelbar um das Hebezeug herum oder um den am Hebezeug befestigten Container herum von dem 3D-Lidarsensor überwacht wird. Ferner wird vorteilhaft nicht die gesamte Arbeitsfläche überwacht, sondern ein jeweiliger Zugangsbereich als solches, wodurch sich die auszuwertende Datenmenge verringert.

Aufgrund der rechteckförmigen Geometrie der Zugangsbereiche zwischen unmittelbar benachbarten Ladebereichen, findet unabhängig von der Länge eines Transportfahrzeuges immer eine Überwachung des gesamten Zugangsbereichs statt, insbesondere wenn mehrere 3D-Lidarsensoren einen jeweiligen Zugangsbereich abschnittsweise überwachen. Ferner sind wegen der rechteckförmigen Geometrie der Zugangsbereiche weniger Abschattungen als bei gewinkelten Zugangsbereichen im Betrieb der Container-Verladeanlage zu erwarten.

Ferner können, insbesondere wegen der rechteckförmigen Geometrie der Zugangsbereiche, die Zugangsbereiche von einem jeweiligen 3D-Laserscanner eingeständig erkannt und als Überwachungsbereich eingerichtet werden. Dies erlaubt einen sicheren automatisierten Container-Verladebetrieb.

Unter einer Arbeitsfläche ist vorliegend zumindest die Fläche unter einem Containerkran zu verstehen, die zur Be- und Entladung von Transportfahrzeugen ausgebildet ist, und damit Ladebereiche und Zugangsbereiche umfasst.

Die Transportfahrzeuge umfassen LKW, Schiffe und bevorzugt Schienenfahrzeuge.

Unter einem Ladebereich ist vorliegend der unmittelbare Bereich um das Transportfahrzeug zu verstehen, d.h. im Wesentlichen der durch das Transportfahrzeug als solches abgegrenzte Bereich auf der Arbeitsfläche. Dies kann auch eine auf der Arbeitsfläche markierte Fahrspur für einen LKW sein oder der durch ein Gleisbett zur Führung eines Schienenfahrzeugs begrenzte Bereich. Ein Ladebereich kann sich durch ein sehr breites Transportfahrzeug, welches über ein Gleisbett oder eine markierte Fahrbahnspur hinausgeht, in seiner Breite erweitern. Ein Ladebereich ist somit nicht lediglich durch eine Transportfahrzeugspur definiert, beispielsweise ein Gleisbett, sondern auch durch die Breite eines jeweiligen Transportfahrzeugs.

Unter einem Trägerelement ist insbesondere ein Stahlträger des Containerkrans zu verstehen, welcher sich über die Arbeitsfläche erstreckt, insbesondere über mehrere auf der Arbeitsfläche angeordnete Gleise für Schienenfahrzeuge. Die Gleise verlaufen dabei im Wesentlichen parallel zueinander, so dass sich zwischen den jeweiligen Gleisen die Zugangsbereiche ausbilden.

Der 3D-Lidarsensor ist oberhalb des jeweiligen Zugangsbereichs insbesondere mittig an dem Trägerelement angeordnet. Damit ist gemeint, dass der 3D-Lidarsensors in Bezug auf die Breite zwischen den Zugangsbereichen mittig angeordnet sein kann, d.h. sich in der Mitte der Breite eines Zugangsbereichs befindet.

Der 3D-Lidarsensor richtet den Überwachungsbereich bevorzugt eingeständig ein. Damit ist gemeint, dass der 3D-Lidarsensor die unmittelbar zueinander benachbart verlaufenden, insbesondere parallel zueinander verlaufenden Zugangsbereiche erkennt, beispielsweise parallel zueinander verlaufende Gleise. Anhand der erkannten Zugangsbereiche bestimmt der 3D-Lidarsensor einen Überwachungsbereich zwischen den benachbarten Zugangsbereichen nach vorgegebenen Kriterien. Diese können abhängig von einer jeweiligen Ausführung des 3D-Lidarsensors sein, wie beispielsweise die räumliche Auflösung oder die Größe des Sichtbereichs des 3D-Lidarsensors und/oder abhängig sein, von Umgebungsparametern der Container-Anlage oder des Containerkrans als solchem. Umgebungsparameter umfassen beispielsweise die Höhe der Befestigung des 3D-Lidarsensors oberhalb der Arbeitsfläche, oder die bewegliche, d.h. schwenkbare oder unbewegliche Befestigung des 3D-Lidarsensors an dem Trägerelement, aber auch die Breite eines Transportfahrzeuges, denn die Breite eines Transportfahrzeuges kann für jedes Transportfahrzeug anders sein, so dass ein durch das eingeständige Einrichten erzeugter erster Überwachungsbereich für ein erstes Transportfahrzeug, für ein danach folgendes zweites Transportfahrzeug ungeeignet ist, beispielsweise weil das erste Fahrzeuge wesentlich breiter als das zweite Transportfahrzeug ist.

Zudem können die Überwachungsbereiche für mehrere, gleichzeitig in der Container-Verladeanlage positionierte Transportfahrzeuge, individuell, insbesondere durch das automatische Einrichten, automatisch dimensioniert werden. Damit hat die Container-Verladeanlage eine hohe Flexibilität an unterschiedlichste Anforderungen. Das eigenständige, d.h. automatisierte Einrichten eines Überwachungsbereichs in Abhängigkeit der Breite der auf, unmittelbar benachbart zueinander angrenzenden Ladebereichen positionierten Transportfahrzeugen, kann die Vorgabe von beispielsweise rechteckförmigen Überwachungsbereichen umfassen, so dass lediglich die Breite eines jeweiligen Überwachungsbereichs an die Transportfahrzeuge angepasst wird.

Die jeweiligen 3D-Lidarsensoren können unbeweglich an dem Trägerelement angeordnet, d.h. befestigt sein. Damit ist gemeint, dass die 3D-Lidarsensoren nicht schwenkbar an dem Trägerelement angeordnet sind. Dies betrifft Ausführungsformen von 3D-Lidarsensoren, bei denen eine flächige Abtastung ohne das Schwenken des Sensorgehäuses möglich ist, indem beispielsweise der 3D-Lidarsensor mehrere Scanspiegel aufweist oder mehrere Lichtquellen umfasst.

In einer besonders bevorzugten Ausführungsform ist der 3D-Lidarsensor eingerichtet, Objekte, insbesondere Personen, in dem Überwachungsbereich zu detektieren und ein Feststellungssignal zur Weiterleitung an die Steuereinrichtung zu erzeugen.

Die Auswertung der Daten erfolgt dadurch vorteilhaft dezentral in einem jeweiligen 3D-Laserscanner, so dass die Steuereinrichtung lediglich die einzelnen Feststellungssignale auswerten muss. Damit kann eine bereits vorhandene Steuereinrichtung einfacher auf die erfindungsgemäße Verladeanlage umgerüstet bzw. modernisiert werden.

In einer Weiterbildung der Ausführungsform, ist der 3D-Lidarsensor eingerichtet, feststehende Objekte in dem Überwachungsbereich zu detektieren und sich zu merken, d.h. einzulernen, so dass wenn feststehende Objekte detektiert werden, kein Feststellungssignal, oder ein für diese Objekte spezifisches Feststellungssignal, zur Weiterleitung an die Steuereinrichtung erzeugt wird. Unter feststehenden Objekten sind insbesondere ortsfeste Objekte zu verstehen. Feststehende Objekte umfassen Schaltkästen, Signale, Steuerungen für Weichen. Von dem 3D-Lidarsensor detektierte feststehende Objekte können von der Steuereinrichtung auf einer Karte eingetragen werden, indem die Steuereinrichtung die für feststehende Objekte spezifischen Feststellungssignale empfängt und auswertet.

In einer besonders bevorzugten Ausführungsform ist der 3D-Lidarsensor eingerichtet, eine relative Position zwischen dem Objekt und einer Containerkranposition zur Weiterleitung an die Steuereinrichtung zu berechnen.

Durch die Berechnung der relativen Position kann abgeschätzt werden, ob ein Warnsignal und/oder einen Notstopp an beispielsweise eine Containerkransteuerung ausgegeben werden muss oder nicht. Dabei kann durch Berechnung der Trajektorie der Kranbewegung vom Ziel- zum Entladeort die Unterschreitung eines Mindestabstandes zwischen Objekt und Container bzw. Containerkranposition durch die relative Position überprüft und zur Entscheidung bzw. Abschätzung der Ausgabe eines Warnsignals benutzt werden.

In einer besonders bevorzugten Ausführungsform gibt die Steuereinrichtung eine Warnung und/oder einen Notstopp, insbesondere an eine Containerkransteuerung aus, sobald ein Objekt, insbesondere eine Person, in dem Überwachungsbereich durch den 3D-Lidarsensor festgestellt wird.

In einer besonders bevorzugten Ausführungsform ist der Überwachungsbereich rechteckförmig ausgebildet und symmetrisch zum Zugangsbereich ausgerichtet.

Dadurch ist eine besonders einfache durch ein Sichtfeld des 3D-Lidarsensors zu erfassende symmetrische Geometrie realisiert, die beispielsweise keine aufwendige Schwenkbewegung des 3D-Lidarsensors erfordert. Die Befestigung des 3D-Lidarsensors an dem Trägerelement kann daher mit einfachen technischen Mitteln erfolgen, insbesondere bei vollständig unbeweglicher Montage des 3D-Lidarsensors an dem Trägerelement, wenn eine flächige Abtastung innerhalb des Scanners selbst erzeugt wird.

In einer besonders bevorzugten Ausführungsform ist der Überwachungsbereich breiter als der Zugangsbereich, so dass der Überwachungsbereich zusätzlich jeweils einen Teil der unmittelbar zueinander benachbarten Beladebereiche erfasst.

Damit kann neben dem eigentlichen Überwachungsbereich auch erkannt werden, ob ein Transportfahrzeug innerhalb des jeweils angrenzenden Ladebereichs positioniert ist und insbesondere auch, ob ein Transportfahrzeug beladen oder entladen werden muss.

In einer besonders bevorzugten Ausführungsform weist der Containerkran ein weiteres Trägerelement auf, an dem oberhalb des jeweiligen Zugangsbereichs ein weiterer 3D-Lidarsensor, insbesondere unbeweglich, angeordnet ist, so dass der Überwachungsbereich des jeweiligen Zugangsbereichs durch den einen und den weiteren 3D-Lidarsensor überwacht wird.

Damit kann ein größerer Bereich des Zugangsbereichs überwacht werden. Bei 3D-Lidarsensoren mit einem nicht-symmetrischen Sichtbereich wird der 3D-Lidarsensor bevorzugt so weit gekippt, dass der Sichtbereich den Zugangsbereich zu beiden Seiten des Sichtbereichs gleichweit erfasst bzw. überwacht.

Die Erfindung betrifft ferner eine Steuereinrichtung, die zu einer Verwendung in einer Container-Verladeanlage geeignet ist und welche eine Empfangs- und Verarbeitungseinheit umfasst, dadurch gekennzeichnet, dass die Empfangs- und Verarbeitungseinheit eingerichtet ist, ein Feststellungssignal eines 3D-Lidarsensors zu empfangen und zu verarbeiten, um ein Warnsignal und/oder einen Notstopp, insbesondere an eine Containerkransteuerung, auszugeben.

Ferner betrifft die Erfindung ein Verfahren zur Überwachung von Zugangsbereichen einer Container-Verladeanlage mit mindestens einem 3D-Lidarsensor, aufweisend die folgenden Schritte:
- Anbringen des 3D-Lidarsensors oberhalb eines Zugangsbereichs, insbesondere mittig, an einem Trägerelement eines Containerkrans der Container-Verladeanlange, wobei das Trägerelement eine Arbeitsfläche der Container-Verladeanlage überspannt, der Lade- und Zugangsbereiche umfasst, wobei ein jeweiliger Zugangsbereich zwischen zwei unmittelbar benachbarten Ladebereichen rechteckförmig ausgebildet ist;
- Ausrichten des 3D-Lidarsensors an dem Trägerelement, so dass Objekte, insbesondere Personen, in einem Überwachungsbereich von dem 3D-Lidarsensor erfasst werden, wobei der Überwachungsbereich als Teil eines jeweiligen Zugangsbereichs ausgebildet ist;
- Aussenden eines Feststellungssignals durch den 3D-Lidarsensor an eine Steuereinrichtung der Container-Verladeanlage, ob ein Objekt in dem Überwachungsbereich detektiert wurde oder nicht.

In einer besonders bevorzugten Ausführungsform des Verfahrens, umfasst das Ausrichten des 3D-Lidarsensors einen weiteren Schritt, in dem der 3D-Lidarsensor unmittelbar benachbarte Ladebereiche automatisch erkennt und einen Überwachungsbereich zwischen zwei erkannten Ladebereichen eigenständig festlegt.

Weitere bevorzugte Ausgestaltungen der Container-Verladeanlage, der Steuereinrichtung oder des Verfahrens zur Überwachung von Zugangsbereichen einer Container-Verladeanlage mit mindestens einem 3D-Lidarsensor ergeben sich aus der nachfolgenden Beschreibung der Ausführungsbeispiele in Zusammenhang mit den Figuren und deren Beschreibung. Gleiche Bauteile werden im Wesentlichen durch gleiche Bezugszeichen gekennzeichnet, falls dies nicht anders beschrieben wird oder sich nicht anders aus dem Kontext ergibt.
Fig. 1 zeigt eine schematische Darstellung einer Ausführungsform der erfindungsgemäßen Container-Verladeanlage mit einem Containerkran, der ein einzelnes Trägerelement umfasst und sich über drei Ladebereiche erstreckt.
Fig. 2 zeigt eine schematische Darstellung einer Ausführungsform der in Fig. 1 dargestellten Container-Verladeanlage, wobei der Containerkran zwei Trägerelemente aufweist.
Fig. 3 zeigt eine schematische Darstellung einer Ausführungsform der erfindungsgemäßen Steuereinrichtung, die zum Empfangen und Verarbeiten eines Feststellungssignals ausgebildet ist.

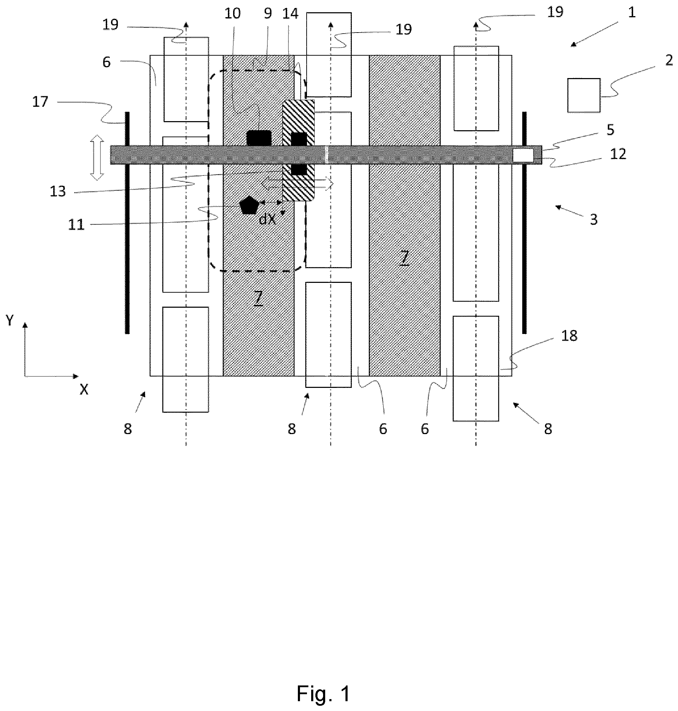

In Fig. 1 ist eine schematische Darstellung einer Ausführungsform der erfindungsgemäßen Container-Verladeanlage 1 mit einem Containerkran 3, der ein einzelnes Trägerelement 5 umfasst und sich über drei Ladebereiche 6 erstreckt, gezeigt. Der Containerkran 3 weist eine Laufkatze 13 auf, die an dem Trägerelement 5 in X-Richtung verfahrbar befestigt ist. An der Laufkatze kann durch ein Hebezeug (nicht gezeigt) ein Container 14 zum Be- und Entladen von Transportfahrzeugen befestigt werden. Zu diesem Zwecke kann sich das Trägerelement 5 in Y- Richtung verschieben. Die Arbeitsfläche 4 umfasst drei parallel zueinander angeordnete Ladebereiche 6, die durch zwei ebenfalls parallel zueinander und parallel zu den Ladebereichen 6 verlaufende Zugangsbereiche 7 jeweils getrennt sind. Von einem schraffiert dargestellten Zugangsbereich 7 aus können Personen 11 jeweils zwei daran angrenzende Ladebereiche 6 kontrollieren. Auf den Ladebereichen 6 sind Transportfahrzeuge 8 auf Transportfahrzeugspuren 19 zum Be- und Entladen positioniert. In der in Fig. 1 dargestellten Ausführungsform der Container-Verladeanlage sind jeweils Schienenfahrzeuge 8 mit Wagons 18 dargestellt und die Transportfahrzeugspur 19 ist in Form eines Gleisbetts ausgebildet. Ein Container 14 wird wie in Fig. 1 angedeutet, von einem ersten Wagon 18 mit der Laufkatze über einen Zugangsbereich 6 bewegt. Eine Person 11 befindet sich in einem Abstand dX, von der in Y-Richtung verlaufenden Seitenfläche des Containers 14. Der Abstand ist in Fig. 1 durch einen gestrichelt dargestellten Pfeil gekennzeichnet. Der Abstand kann von dem 3D-Lidarsensor automatisch aus den Messdaten berechnet werden. In dem in Fig. 1 dargestellten Fall wäre die Person durch die Bewegung des Containers in X-Richtung auf die Person zu durch den Container gefährdet. Der 3D-Lidarsensor würde in solch einem Fall ein Feststellungssignal und den Abstand dX als eine relative Position an die Containerkransteuereinrichtung 12 und/oder die Steuereinrichtung 2 ausgeben. Dies würde beispielsweise einen Nothalt des Containerkrans auslösen.

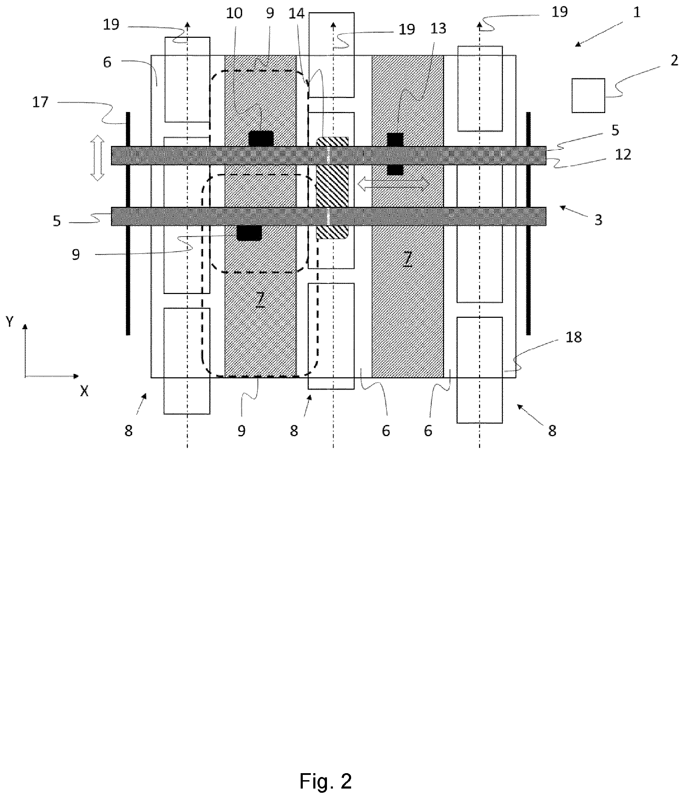

Der Überwachungsbereich 9 ist in der Fig. 1 skizierten Ausführungsform gestrichelt umrandet dargestellt und rechteckförmig zwischen den Ladebereichen 6 ausgebildet. Der 3D-Lidarsensor 10 ist in dieser Ausführungsform mittig in Bezug auf die Breite des schraffiert dargestellten Zugangsbereichs 7 an dem Trägerelement montiert und überwacht den gestrichelt dargestellten Überwachungsbereich 9. Der Überwachungsbereich 9 grenzt an die Breite der Wagons 18 der Schienenfahrzeuge 8 an. In Fig. 2 ist die in Fig. 1 dargestellte Container-Verladeanlage 1 dargestellt, in der Ausführung mit einem Containerkran 3, der zwei Trägerelemente 5 aufweist. Dabei befindet sich ein erster 3D-Lidarsensor 10 an dem ersten Trägerelement 5 und ein zweiter 3D-Lidarsensor 10 an dem zweiten Trägerelement. Der erste 3D-Lidarsensor 10 ist mittig an dem ersten Trägerelement 5 befestigt, während der zweite 3D-Lidarsensor 10 zur Mitte versetzt an dem zweiten Trägerelement 5 befestigt ist. Zur Vereinfachung ist eine Laufkatze 13 nicht zwischen dem ersten 5 und dem zweiten Trägerelement 5 befestigt gezeichnet, sondern lediglich das erste Trägerelement 5 weist die Laufkatze 13 auf. Ein Container 14 befindet sich auf dem mittleren Wagon 18, welcher auf der mittleren Transportfahrzeugspur 19 positioniert ist. Der Überwachungsbereich 9 des zweiten 3D-Lidarsensors 10 überlappt in X-Richtung, d.h. in Richtung der Breite des Zugangsbereichs 7 mit dem Ladebereich 6, wodurch auch Teile des Schienenfahrzeugs 8 von dem 3D-Lidarsensor 10 erkannt werden. Dies ermöglicht die zusätzliche Erfassung des Ladezustandes des Transportfahrzeugs 8 durch den 3D-Lidarsensor 10. In der in Fig. 2 dargestellten Ausführungsform wird der Zugangsbereich 7 deshalb durch zwei unterschiedlich breit ausgebildete Überwachungsbereiche 9 überwacht. In Y-Richtung, d.h. in Längsrichtung der Zugangsbereiche 7, erfolgt keine vollständige Überwachung, während in der Mitte des Zugangsbereichs 7 die jeweiligen Überwachungsbereiche 9 der jeweiligen 3D-Lidarsensoren 10 überlappen. Dies erlaubt eine Art Vergleichsmessung bzw. redundante Auswertung der Messdaten, so dass Abschattungen im Überwachungsbereich 9 durch einen Container 14 im Sichtfeld des einen 3D-Lidarsensors 10, durch das noch freie Sichtfeld des anderen 3D-Lidarsensors 10 ergänzt werden können. Damit erhöht sich die Sicherheit der Container-Verladeanlage 1.

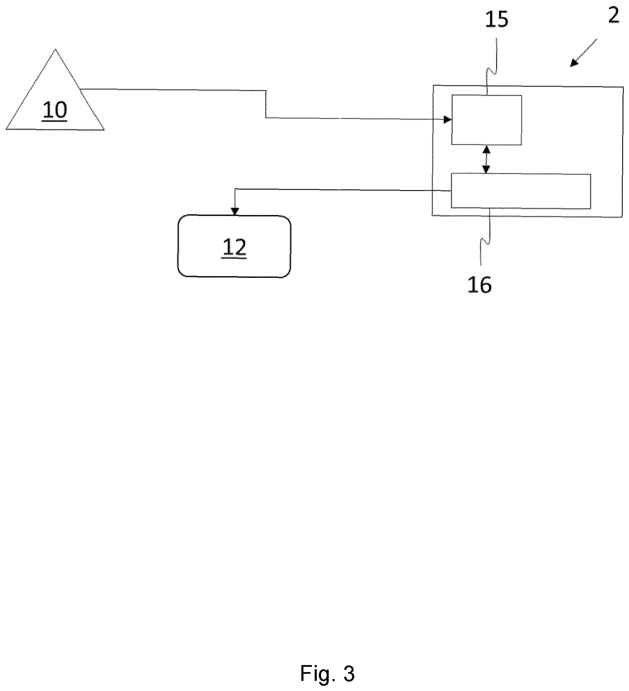

In Fig. 3 ist eine schematische Darstellung einer Ausführungsform der erfindungsgemäßen Steuereinrichtung 2 dargestellt, die zum Empfangen und Verarbeiten eines Feststellungssignals ausgebildet ist. Die Steuereinrichtung 2 umfasst eine Empfangseinheit 15 und eine Verarbeitungseinheit 16. Ein 3D-Lidarsensor sendet ein Feststellungssignal (nicht gezeigt) an die Empfangseinheit 15 der Steuereinrichtung 2. Die Steuereinrichtung überträgt das Feststellungssignal an die Verarbeitungseinheit 16 zur Auswertung. Die Verarbeitungseinheit 16 sendet beispielsweise ein Stoppsignal an die Containerkransteuerung 12. Alternativ dazu und/oder ergänzend kann ein Warnsignal an die Containerkransteuerung 12 ausgegeben werden. Weiter alternativ kann der 3D-Lidarsensor 10 eine relative Position eines Objektes an die Steuereinrichtung 2 übertragen. Die Steuereinrichtung 2 wertet die relative Position des Objektes hinsichtlich eines vorbestimmten Minimalabstandes aus und gibt im Falle einer Unterschreitung des Minimalabstandes ein Warnsignal und/oder ein Stoppsignal an die Containerkransteuerung 12 aus.

### Liste der Bezugszeichen

- 1: Container-Verladeanlage
- 2: Steuereinrichtung
- 3: Containerkran
- 4: Arbeitsfläche
- 5: Trägerelement
- 6: Ladebereiche (Be- und Entladebereiche)
- 7: Zugangsbereiche
- 8: Transportfahrzeuge
- 9: Überwachungsbereich
- 10: 3D-Lidarsensor
- 11: Objekt, insbesondere Person
- 12: Containerkransteuerung
- 13: Laufkatze
- 14: Container
- 15: Empfangseinheit
- 16: Verarbeitungseinheit
- 17: Containerkranspur
- 18: Wagon
- 19: Transportfahrzeugspur

## Patentansprüche

1. Container-Verladeanlage (1) mit einer Steuereinrichtung (2), einem Containerkran (3) und einer Arbeitsfläche (4) unterhalb des Containerkrans (3), wobei der Containerkran (3) mindestens ein Trägerelement (5) aufweist, dass sich über die Arbeitsfläche (4) erstreckt und wobei die Arbeitsfläche (4) Ladebereiche (6) und Zugangsbereiche (7) aufweist und
die Ladebereiche (6) eingerichtet sind, Transportfahrzeuge (8), insbesondere Schienenfahrzeuge (8), zur Be- oder Entladung durch den Containerkran (3) abschnittsweise aufzunehmen und die Zugangsbereiche (7) jeweils zwischen zwei unmittelbar benachbarten Ladebereichen (6) rechteckförmig ausgebildet sind, so dass Personen (11) Zugang zu den Ladebereichen (6) haben,
wobei ein jeweiliger Zugangsbereich (7) einen Überwachungsbereich (9) aufweist, der durch mindestens einen 3D-Lidarsensor (10), zumindest während des Beladens der Transportfahrzeuge (8), insbesondere der Schienenfahrzeuge (8), in voller Breite überwacht wird, wobei der 3D-Lidarsensor (10) oberhalb des jeweiligen Zugangsbereichs (7), insbesondere mittig, an dem Trägerelement (5), insbesondere unbeweglich, angeordnet ist und insbesondere den Überwachungsbereich eigenständig einrichtet.

2. Container-Verladeanlage nach Anspruch 1, **dadurch gekennzeichnet, dass** der 3D-Lidarsensor (10) eingerichtet ist, Objekte (11), insbesondere Personen, in dem Überwachungsbereich (9) zu detektieren und ein Feststellungssignal zur Weiterleitung an die Steuereinrichtung (2) zu erzeugen.

3. Container-Verladeanlage nach Anspruch 2, **dadurch gekennzeichnet, dass** der 3D-Lidarsensor (10) eingerichtet ist, eine relative Position zwischen dem Objekt (11) und einer Containerkranposition zur Weiterleitung an die Steuereinrichtung (2) zu berechnen.

4. Container-Verladeanlage nach Anspruch 2, **dadurch gekennzeichnet, dass** die Steuereinrichtung (2) eine Warnung und/oder einen Notstopp, insbesondere an eine Containerkransteuerung (12), ausgibt, sobald ein Objekt (11), insbesondere eine Person (11), in dem Überwachungsbereich (9) durch den 3D-Lidarsensor (10) festgestellt wird.

5. Container-Verladeanlage nach Anspruch 1, **dadurch gekennzeichnet, dass** der Überwachungsbereich (9) rechteckförmig ausgebildet ist und symmetrisch zum Zugangsbereich (7) ausgerichtet ist.

6. Container-Verladeanlage nach Anspruch 1, **dadurch gekennzeichnet, dass** der Überwachungsbereich (9) breiter als der Zugangsbereich (7) ist, so dass der Überwachungsbereich (9) zusätzlich jeweils einen Teil der unmittelbar zueinander benachbarten Beladebereiche (6) erfasst.

7. Container-Verladeanlage nach Anspruch 1, **dadurch gekennzeichnet, dass** der Containerkran (3) ein weiteres Trägerelement (5) aufweist und oberhalb des jeweiligen Zugangsbereichs (7) an dem weiteren Trägerelement (5) ein weiterer 3D-Lidarsensor (10), insbesondere unbeweglich, angeordnet ist, so dass der Überwachungsbereich (9) des jeweiligen Zugangsbereichs (7) durch den einen und den weiteren 3D-Lidarsensor (10) überwacht wird.

8. Verfahren zur Überwachung von Zugangsbereichen (7) einer Container-Verladeanlage (1) mit mindestens einem 3D-Lidarsensor, aufweisend die folgenden Schritte:
- Anbringen des 3D-Lidarsensors (1), insbesondere mittig, an einem Trägerelement (5) eines Containerkrans (3) der Container-Verladeanlange (1), wobei das Trägerelement (5) eine Arbeitsfläche (4) der Container-Verladeanlage (1) überspannt, der Lade- (6) und Zugangsbereiche (7) umfasst, wobei ein jeweiliger Zugangsbereich (7) zwischen zwei unmittelbar benachbarten Ladebereichen (6) rechteckförmig ausgebildet ist;
- Ausrichten des 3D-Lidarsensors (10) an dem Trägerelement (5), so dass Objekte (11), insbesondere Personen (11), in einem Überwachungsbereich (9) von dem 3D-Lidarsensor (10) erfasst werden, wobei der Überwachungsbereich (9) als Teil eines jeweiligen Zugangsbereichs (7) ausgebildet ist;
- Aussenden eines Feststellungssignals durch den 3D-Lidarsensor (10) an eine Steuereinrichtung (2) der Container-Verladeanlage (1), ob ein Objekt (11) in dem Überwachungsbereich (9) detektiert wurde oder nicht.

9. Verfahren nach Anspruch 8, **dadurch gekennzeichnet, dass** das Ausrichten des 3D-Lidarsensors (10) einen Schritt umfasst, in dem der 3D-Lidarsensor (10) unmittelbar benachbarte Ladebereiche (6) erkennt und einen Überwachungsbereich (9) zwischen zwei erkannten Ladebereichen (6) eigenständig festlegt.

## Claims

1. Container loading system (1) comprising a control unit (2), a container crane (3), and a working area (4) located beneath the container crane (3), wherein the container crane (3) comprises at least one support element (5) that extends over the working area (4), and wherein the working area (4) comprises loading areas (6) and access areas (7), and the loading areas (6) are configured to receive transport vehicles (8), in particular rail vehicles (8), section-wise for loading or unloading by the container crane (3), and the access areas (7) are each formed rectangularly between two immediately adjacent loading areas (6) so that persons (11) have access to the loading areas (6), wherein a respective access area (7) comprises a monitoring area (9), which is monitored in full width by at least one 3D lidar sensor (10), at least during loading of the transport vehicles (8), in particular the rail vehicles (8), wherein the 3D lidar sensor (10) is arranged above the respective access area (7), in particular centrally, on the support element (5), in particular immovably, and in particular autonomously configures the monitoring area.

2. Container loading system according to claim 1, **characterized in that** the 3D lidar sensor (10) is configured to detect objects (11), in particular persons, in the monitoring area (9) and to generate a detection signal for forwarding to the control unit (2).

3. Container loading system according to claim 2, **characterized in that** the 3D lidar sensor (10) is configured to calculate a relative position between the object (11) and a container crane position for forwarding to the control unit (2).

4. Container loading system according to claim 2, **characterized in that** the control unit (2) outputs a warning and/or an emergency stop, in particular to a container crane control (12), as soon as an object (11), in particular a person (11), is detected in the monitoring area (9) by the 3D lidar sensor (10).

5. Container loading system according to claim 1, **characterized in that** the monitoring area (9) is formed rectangularly and aligned symmetrically with respect to the access area (7).

6. Container loading system according to claim 1, **characterized in that** the monitoring area (9) is wider than the access area (7) so that the monitoring area (9) additionally covers a part of the immediately adjacent loading areas (6).

7. Container loading system according to claim 1, **characterized in that** the container crane (3) comprises a further support element (5) and that a further 3D lidar sensor (10), in particular immovably, is arranged above the respective access area (7) on the further support element (5) so that the monitoring area (9) of the respective access area (7) is monitored by the one and the further 3D lidar sensor (10).

8. Method for monitoring access areas (7) of a container loading system (1) with at least one 3D lidar sensor, comprising the following steps:
- Attaching the 3D lidar sensor (10), in particular centrally, to a support element (5) of a container crane (3) of the container loading system (1), wherein the support element (5) spans a working area (4) of the container loading system (1) comprising loading areas (6) and access areas (7), wherein a respective access area (7) is formed rectangularly between two immediately adjacent loading areas (6);
- Aligning the 3D lidar sensor (10) on the support element (5) so that objects (11), in particular persons (11), are detected in a monitoring area (9) by the 3D lidar sensor (10), wherein the monitoring area (9) is formed as part of a respective access area (7);
- Sending a detection signal by the 3D lidar sensor (10) to a control unit (2) of the container loading system (1) indicating whether an object (11) has been detected in the monitoring area (9) or not.

9. Method according to claim 8, **characterized in that** aligning the 3D lidar sensor (10) comprises a step in which the 3D lidar sensor (10) detects immediately adjacent loading areas (6) and autonomously defines a monitoring area (9) between two detected loading areas (6).

## Revendications

1. Système de chargement de conteneurs (1) comprenant une unité de commande (2), une grue à conteneurs (3) et une zone de travail (4) située sous la grue à conteneurs (3), dans lequel la grue à conteneurs (3) comprend au moins un élément porteur (5) qui s'étend au-dessus de la zone de travail (4), et dans lequel la zone de travail (4) comprend des zones de chargement (6) et des zones d'accès (7), et les zones de chargement (6) étant conçues pour recevoir des véhicules de transport (8), en particulier des véhicules ferroviaires (8), par sections pour le chargement ou le déchargement par la grue à conteneurs (3), et les zones d'accès (7) étant chacune formées de manière rectangulaire entre deux zones de chargement (6) immédiatement adjacentes, de sorte que des personnes (11) aient accès aux zones de chargement (6), dans lequel une zone d'accès respective (7) comprend une zone de surveillance (9), qui est surveillée sur toute sa largeur par au moins un capteur lidar 3D (10), au moins pendant le chargement des véhicules de transport (8), en particulier des véhicules ferroviaires (8), dans lequel le capteur lidar 3D (10) est disposé au-dessus de la zone d'accès respective (7), en particulier au centre, sur l'élément porteur (5), en particulier de manière immobile, et configure notamment la zone de surveillance de manière autonome.

2. Système de chargement de conteneurs selon la revendication 1, **caractérisé en ce que** le capteur lidar 3D (10) est configuré pour détecter des objets (11), en particulier des personnes, dans la zone de surveillance (9) et pour générer un signal de détection destiné à être transmis à l'unité de commande (2).

3. Système de chargement de conteneurs selon la revendication 2, **caractérisé en ce que** le capteur lidar 3D (10) est configuré pour calculer une position relative entre l'objet (11) et une position de la grue à conteneurs pour l'acheminement à l'unité de commande.

4. Système de chargement de conteneurs selon la revendication 2, **caractérisé en ce que** l'unité de commande (2) émet un avertissement et/ou un arrêt d'urgence, notamment à une commande de grue à conteneurs (12), dès qu'un objet (11), en particulier une personne (11), est détecté dans la zone de surveillance (9) par le capteur lidar 3D (10).

5. Système de chargement de conteneurs selon la revendication 1, **caractérisé en ce que** la zone de surveillance (9) est formée de manière rectangulaire et est alignée symétriquement par rapport à la zone d'accès (7).

6. Système de chargement de conteneurs selon la revendication 1, **caractérisé en ce que** la zone de surveillance (9) est plus large que la zone d'accès (7), de sorte que la zone de surveillance (9) capte en outre une partie des zones de chargement (6) respetive immédiatement adjacentes.

7. Système de chargement de conteneurs selon la revendication 1, **caractérisé en ce que** la grue à conteneurs (3) comprend un autre élément porteur (5) et qu'un autre capteur lidar 3D (10), notamment de manière immobile, est disposé au-dessus de la zone d'accès respective (7) sur l'autre élément porteur (5), de sorte que la zone de surveillance (9) de la zone d'accès respective (7) soit surveillée par le premier et l'autre capteur lidar 3D (10).

8. Procédé de surveillance des zones d'accès (7) d'un système de chargement de conteneurs (1) avec au moins un capteur lidar 3D, comprenant les étapes suivantes:
- Fixation du capteur lidar 3D (10), en particulier au centre, sur un élément porteur (5) d'une grue à conteneurs (3) du système de chargement de conteneurs (1), dans lequel l'élément porteur (5) s'étend au-dessus d'une zone de travail (4) du système de chargement de conteneurs (1) comprenant des zones de chargement (6) et des zones d'accès (7) dans lequel une zone d'accès respective (7) est formée de manière rectangulaire entre deux zones de chargement (6) immédiatement adjacentes ;
- Orientation du capteur lidar 3D (10) sur l'élément porteur (5), de sorte que des objets (11), notamment des personnes (11), soient détectés dans une zone de surveillance (9) par le capteur lidar 3D (10), dans lequel la zone de surveillance (9) est formée comme partie d'une zone d'accès respective (7) ;
- Envoi d'un signal de détection par le capteur lidar 3D (10) à une unité de commande (2) du système de chargement de conteneurs (1) indiquant si un objet (11) a été détecté dans la zone de surveillance (9) ou non.

9. Procédé selon la revendication 8, **caractérisé en ce que** l'orientation du capteur lidar 3D (10) comprend une étape dans laquelle le capteur lidar 3D (10) détecte des zones de chargement (6) immédiatement adjacentes et définit de manière autonome une zone de surveillance (9) entre deux zones de chargement (6) détectées.
